# EUROPÄISCHE PATENTSCHRIFT

(11) **EP 1 217 528 B1**
(45) Veröffentlichungstag und Bekanntmachung des Hinweises auf die Patenterteilung: **24.02.2010**
(21) Anmeldenummer: 01000674.0
(22) Anmeldetag: 29.11.2001
(51) Int. Cl.: G06F 13/40

(54) **Schaltungsanordnung zur Fehlerkennung eines Zweidraht-Datenbusses**
Circuit arrangement for error detection on a two wires data bus
Arrangement d'un circuit pour la détection d'erreurs d'un bus de données à deux fils

(30) Priorität: 30.11.2000 DE 10059769
(43) Veröffentlichungstag der Anmeldung: 26.06.2002
(73) Patentinhaber: NXP B.V., 5656 AG Eindhoven (NL)
(72) Erfinder: Muth, Matthias, c/o Philips Corp. Int. Prop. GmbH, 52064, Aachen (DE); Suermann, Thomas, c/o Philips Corp. Int. Prop.GmbH, 52064, Aachen (DE)
(74) Vertreter: Schouten, Marcus Maria

(56) Entgegenhaltungen:
- DE-A- 19 509 133
- US-A- 5 600 782
- US-A- 6 154 061

## Beschreibung

Die Erfindung betrifft eine Schaltungsanordnung zur Fehlererkennung eines Zweidraht-Datenbusses, auf dem gesendete, dominante Bits differentiell auf den beiden Busleitungen übertragen werden.

Bei derartigen Datenbussen, wie beispielsweise dem sogenannten CAN-Bus, dessen Eigenschaften in der ISO 11898 festgelegt sind, werden einzelne Datenbits differentiell auf den beiden Leitungen des Busses übertragen. Im Ruhezustand haben die beiden Leitungen des Busses etwa gleiches Potential, da die beiden Leitungen über einen Abschlusswiderstand miteinander verkoppelt sind. Ein dominantes Bit wird von einem Sender auf dem Bus aktiv durch Einschalten eines Treiberstromes übertragen. Diese Übertragung geschieht differentiell, d. h. das Potential der einen Leitung des Busses wird angehoben und das Potential der anderen Leitung des Busses abgesenkt. Ein rezessives Bit wird von einem Sender durch Abschalten des Treiberstromes übertragen, In der Folge nehmen die beiden Busleitungen wieder näherungsweise gleiche Potential an.

Bei Datenbussen dieser Bauart können Fehler verschiedener Art auftreten. Es können Kurzschlüsse der einzelnen Leitungen gegen ein Bezugspotential, aber auch gegeneinander auftreten.

Bekannte Schaltungsanordnungen werten daher die Potentiale der Leitungen aus und versuchen auf derartige Kurzschlüsse rückzuschließen. Bei einer aus der US 5488306 bekannten Schaltungsanordnung wird darüber hinaus die Differenz der Potentiale der beiden Busleitungen ausgewertet. Allen diesen bekannten Anordnungen gemeinsam ist der wesentliche Nachteil, dass diese Anordnungen auch auf Masseversätze der beiden Busleitungen reagieren. Derartige Masseversätze, bei denen sich das Potential der beiden Leitungen verschiebt, können insbesondere bei Anwendungen im Automobilbereich auftreten. Bei den bekannten Fehlererkennungsschaltungen führen diese Masseversätze leicht zu falschen Fehlermeldungen, d. h. zu Fehlermeldungen, die nur auf die Masseversätze zurückgehen, die eigentlich keinen Fehler darstellen, und nicht auf tatsächliche Kurzschlüsse der Leitungen. Das Dokument D1 offenbart eine Vorrichtung zur Beseitigung von in einem CAN-bus auftretenden Fehler, wobei eine Fehlerverwaltungslogik die von einem Bit-Stream Prozessor erzeugten Fehlermeldungen empfängt und legt fest, in welchem von einer Vielzahl von Fehlerzuständen das CAN System arbeitet.

Es ist Aufgabe der Erfindung, eine Schaltungsanordnung der eingangs genannten Art anzugeben, welche eine sichere Fehlererkennung gestattet, ohne auf Masseversätze der Busleitungen zu reagieren.

Diese Aufgabe ist erfindungsgemäß dadurch gelöst, dass die Anordnung Mittel zur Differenz-Strommessung aufweist, mittels derer in einem Sender beim Senden dominanter Bits auf den Datenbus die Differenz der Treiberströme, mit denen die beiden Busleitungen angesteuert werden, gemessen wird, und dass Mittel zur Auswertung vorgesehen sind, welche ein Fehlersignal abgeben, wenn die Differenz der Treiberströme einen vorgegebenen Grenzwert überschreitet.

Der Kerngedanke der Erfindung besteht darin, keine Potentialmessung, sondern eine Strommessung vorzunehmen. Es wird die Differenz der beiden Treiberströme zum Ansteuern eines dominanten Bits auf dem Datenbus gemessen. Sender, die Datenbits auf den Datenbus senden, weisen in der Regel zwei Treiber auf, die jeweils eine Datenbusleitung ansteuern. Da die Bits differentiell auf den Datenbus übertragen werden, weisen die Treiberströme entgegengesetztes Vorzeichen auf. Es wird die Differenz dieser Treiberströme ermittelt. Sollte einer der beiden Treiberströme deutlich anwachsen, so würde aufgrund der entgegengesetzten Polarität der beiden Treiberströme auch die Differenz deutlich zunehmen. Es ist ein vorgegebener Grenzwert vorgesehen, der bei normalem Betrieb durch die Differenz der Treiberströme nicht überschritten wird. Bei einem der oben beschriebenen Kurzschlüsse steigt der Differenzstrom jedoch deutlich an, und der vorgegebene Grenzwert wird überschritten. Die Schaltungsanordnung gibt dann eine Fehlermeldung ab.

Da hier die beiden Treiberströme gemessen und ausgewertet werden, führen Potentialverschiebungen auf den beiden Leitungen des Zweidrahtbusses nicht zu Fehlermeldungen, da durch diese Potentialverschiebungen die Treiberströme nur unwesentlich beeinflusst werden, da der Abschlusswiderstand der beiden Leitungen potentialfrei zwischen diese geschaltet ist. Darüber hinaus hat die erfindungsgemäße Schaltungsanordnung ganz allgemein den Vorteil, in Bezug auf äußere EMV-Einflüsse auf die Busleitungen tolerant zu sein.

Die erfindungsgemäße Schaltungsanordnung ist insbesondere, wie gemäß einer Ausgestaltung der Erfindung nach Anspruch 2 vorgesehen ist, für den sogenannten CAN-Bus nach ISO 11898 geeignet, da dieser Bus in Fahrzeugen eingesetzt wird, in denen Masseverschiebungen oder EMV-Einflüsse in der Praxis oft verkommen. Die erfindungsgemäße Schaltungsanordnung liefert auch unter diesen Bedingungen nur dann ein Fehlersignal, wenn tatsächlich ein Kurzschluss der Leitungen untereinander oder auf ein anderes Potential stattgefunden hat.

Eine weitere Ausgestaltung der Erfindung gemäß Anspruch 3 berücksichtigt, dass beim Aufschalten eines dominanten Bits durch einen Sender die Treiberströme zunächst stark ansteigen, da die Leitungen des Busses eine kapazitive Last darstellen. Es ist daher vorteilhaft, die Messung und/oder die Auswertung der Differenz der Treiberströme nicht zu Beginn eines dominanten Bits, sondern in der zweiten Hälfte der Dauer dieses Bits vorzunehmen, da dann die Einschwingvorgänge infolge der kapazitiven/induktiven Last, die die beiden Leitungen darstellen, abgeklungen sind.

Dazu kann vorteilhaft, wie gemäß einer weiteren Ausgestaltung der Erfindung nach Anspruch 5 vorgesehen ist, das in dem CAN-Bus-Protokoll vorgesehene TXD-Signal ausgewertet werden. Das TXD-Signal gibt die Dauer eines dominanten Bits an. Es kann vorteilhaft eine Orientierung an der Rückflanke des TXD-Signals für jedes einzelne Bit vorgenommen werden, da zu diesem Zeitpunkt die Vorgänge auf den Busleitungen eingeschwungen sind und die Treiberströme zu diesem Zeitpunkt nicht mehr von den Einschwingvorgängen beeinflusst sind.

Eine witere Ausgestaltung der Erfindung nach Anspruch 4 dient dazu, eine besonders sichere Erkennung eines Kurzschlusses der beiden Leitungen des Datenbusses untereinander zu gewährleisten. Dazu werden die beiden Treiberströme einzeln mit einem Referenzstrom verglichen, und es wird dann eine Fehlermeldung abgegeben, wenn beide Treiberströme einzeln den Referenzstrom übersteigen. Dies bedeutet eine zusätzliche Sicherheit bei der Fehlererkennung.
Da es, wie oben erläutert, vorteilhaft ist, die Auswertung der Treiberströme gegen Ende einer Bitphase eines dominanten Bits auf dem Datenbus vorzunehmen, sieht eine weitere Ausgestaltung der Erfindung gemäß Anspruch 6 vor, dass die Messung und/oder Auswertung der Treiberströme bzw. der Differenz der Treiberströme mittels eines Timers ausgelöst wird, so dass die Messung und/oder Auswertung eine vorgegebene Zeitspanne nach Beginn des Sendens eines dominanten Bits erfolgt. Dieses stellt eine weitere vorteilhafte Möglichkeit dar, bei der Messung des Differenzstroms der Treiberströme ohne Einfluss der Einschwenkvorgänge auf den Busleitungen vorzunehmen.

In dem CAN-Protokoll ist vorgesehen, während einer sogenannten Arbitrierungsphase sowie während des Sendens des Acknowledge-Bits und der Error-Flex mehrere CAN-Transivers gleichzeitig dominante Bits auf den Bus senden zu lassen. Während dieser Phase kann es bei der Messung der Stromdifferenz zu Werten kommen, die zu einer unerwünschten Fehleranzeige führen. Daher ist es, wie gemäß einer weiteren Ausgestaltung der Erfindung nach Anspruch 7 vorgesehen ist, vorteilhaft, die Messung und/oder Auswertung der Treiberströme bzw. deren Differenz nur während einer in dem CAN-Busprotokoll vorgesehenen "Transmit Interrupt Service Routine" vorzunehmen, da in dieser Phase nur jeweils ein Teilnehmer aktiv Bits auf den Bus senden darf. Es ist somit während dieser Phase eine sichere Auswertung der Treiberströme ohne Störeinflüsse möglich.

Um sicherzustellen, dass ein von der erfindungsgemäßen Schaltungsanordnung abgegebenes Fehlersignal ausreichend lange zur Verfügung steht und nicht durch die Arbitrierungsphase des nächsten Telegramms zerstört wird, ist gemäß einer weiteren Ausgestaltung der Erfindung nach Anspruch 8 vorgesehen, dass die Anordnung Schieberegister aufweist, mittels derer das Ergebnis der Auswertung zwischengespeichert wird, so dass ggf. ein Fehlersignal verzögert ausgegeben wird. Die Länge dieses Schieberegisters bestimmt dabei die Zeit, die eine Transmit Interrupt Service Routine zur Verfügung hat, um eine Fehleranzeige auszuwerten.

Um zu vermeiden, dass bereits während des Sendens eines einzelnen Bits auftretende Differenzströme bereits eine Fehlermeldung auslösen, ist gemäß einer weiteren Ausgestaltung der Erfindung nach Anspruch 9 vorgesehen, dass die Anordnung eine Majoritätsschaltung aufweist. Eine solche Majoritätsschaltung löst nur dann ein Fehlersignal aus, wenn die Majorität mehrerer Messungen ein Überschreiten des Grenzwertes ergeben hat. Diese Majoritätsschaltung ist vorteilhaft mit einem Schieberegister zu verbinden, da das Schieberegister Auswerteergebnisse für mehrere dominante Bits gleichzeitig liefert.

Bei einer derartigen Majoritätsauswertung kann vorteilhaft, wie gemäß einer weiteren Ausgestaltung der Erfindung nach Anspruch 10 vorgesehen ist, eine Auswertung in der Weise vorgenommen werden, dass eine Fehlermeldung vorzugsweise dann unterdrückt wird, wenn während des Sendens eines einzelnen Bits der Differenzstrom den vorgegebenen Grenzwert überschritten hat, nicht jedoch beim Senden der Bits, die diesem Bit benachbart sind, d. h. also des vorhergehenden und des nachfolgenden Bits. In diesem Falle kann nämlich daraus geschlossen werden, dass für das einzelne Bit möglicherweise eine fehlerhafte Fehlerauswertung stattgefunden hat. Es wird dann eine Fehlermeldung unterdrückt.

Eine weitere Ausgestaltung der Erfindung gemäß Anspruch 11 zielt darauf ab, mittels Summenbildung der Treiberströme Arbitrierungsphasen und Acknowledge-Bits von der Fehlerauswertung auszuschließen und somit zu verhindern, dass ein korrekt ausgewertetes Fehlersignal vorzeitig während einer solchen Phase ungewollt überschrieben wird. Arbitrierungsphasen und Acknowledge-Bits sind dadurch gekennzeichnet, dass mehrere Transceiver gleichzeitig ein dominantes Bit auf dem Bus senden können. Als Folge fällt die Summe der beiden Treiberströme unter einen Grenzwert und das Strom-Differenzsignal wird nicht ausgwertet.

Nachfolgend werden zwei Ausführungsbeispiele der Erfindung anhand der Zeichnung näher erläutert. Es zeigen:
- Figur 1: ein erstes Ausführungsbeispiel der erfindungsgemäßen Schaltungsanordnung in Form eines Blockschaltbildes,
- Figur 2: ein Blockschaltbild eines Schieberegisters, wie es beispielsweise in den Mitteln zur Auswertung 5 der Schaltungsanordnung gemäß Figur 1 vorgesehen sein kann,
- Figur 3: ein Schieberegister entsprechend der Darstellung gemäß Figur 2 mit einem zusätzlichen Timer,
- Figur 4: ein Schieberegister entsprechend Figur 2 mit einer Majoritätsauswertung,
- Figur 5: ein Schieberegister mit Majoritätsauswertung entsprechend Figur 4, jedoch mit verlängertem Schieberegister, so dass eine Auswertung mit Zeitverzögerung möglich ist,
- Figur 6: ein zweites Ausführungsbeispiel der erfindungsgemäßen Schaltungsanordnung, welche entsprechend dem ersten Ausführungsbeispiel gemäß Figur 1, jedoch mit zusätzlicher einzelner Auswertung der Treiberströme ausgelegt ist und
- Figur 7: eine mögliche detaillierte Ausgestaltung der Mittel zur Auswertung der Schaltung gemäß dem zweiten Ausführungsbeispiel gemäß Figur 6.

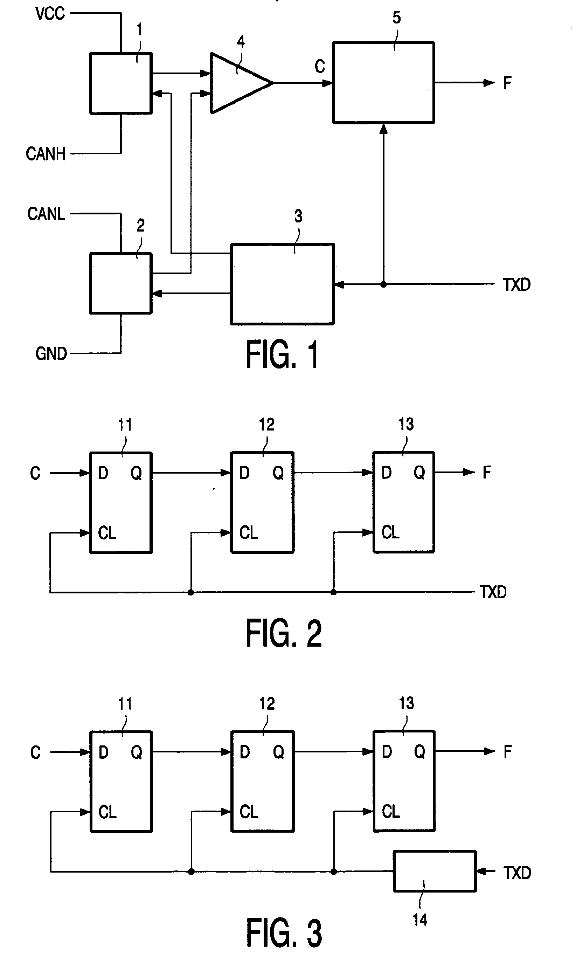

Figur 1 zeigt ein Blockschaltbild eines sogenannten Transivers, d. h. also eines Gerätes, das mit einem Datenbus verbunden ist und mittels welchem Datenbits auf dem Datenbus gesendet werden können. Ferner zeigt das Blockschaltbild gemäß Figur 1 eine implementierte erfindungsgemäße Schaltungsanordnung zur Bus-Fehlererkennung.

Bei dem Ausführungsbeispiel gemäß Figur 1 handelt es sich bei dem Datenbus um einen sogenannten CAN-Bus, dessen Aufbau und dessen Protokoll gemäß ISO 11898 festgelegt ist. Der Datenbus weist zwei Datenbusleitungen CAN H und CAN L auf, über die Bits gegebenenfalls differentiell übertragen werden.

Im Ruhezustand des CAN-Busses weisen beide Datenbusleitungen CAN H und CAN L etwa gleiches Potential auf, da die beiden Leitungen in dem der Figur nicht dargestellter Weise über einen Abschlusswiderstand miteinander verkoppelt sind. Werden einzelne Bits von einem Sender übertragen, so wird das Potential der Datenbusleitung CAN H angehoben und das Potential der Datenbusleitung CAN L abgesenkt.

In der Schaltungsanordnung gemäß Figur 1 geschieht dies mittels eines Treibers 1 bezüglich der Datenbusleitung CAN H und mittels eines Treibers 2 bezüglich der Datenbusleitung CAN L Beide Treiber 1 und 2 werden mittels einer Treibersteuerung 3 angesteuert. Die Treibersteuerung 3 steuert die beiden Treiber 1 und 2 synchron so, dass einzelne Bits differentiell über die beiden Datenbusleitungen CAN H bzw. CAN L übertragen werden. Dazu wird die Treibersteuerung 3 mittels eines Signals TXD angesteuert. Das Signal TXD hat im Ruhezustand hohes Potential. Ein einzelnes, auf dem Datenbus zu übertragendes aktiver dominates Bit ist in dem Signal TXD durch niedrigen Pegel gekennzeichnet. Solange das Signal TXD einen niedrigen Pegel hat, wird also eine entsprechende Ansteuerung der Treiber 1 und 2 mittels der Treibersteuerung 3 vorgenommen, so dass das Bit in oben beschriebener Weise differentiell über die beiden Datenbusleitungen CAN H bzw. CAN L übertragen wird. Zur Stromversorgung ist der Treiber 1 mit einem Versorgungspotential VCC und der Treiber 2 mit einem Bezugspotential GND verbunden.

Bei einer derartigen Übertragung dominanter Bits auf dem Datenbus können gegebenenfalls Störungen auftreten. Insbesondere können die Datenbusleitungen CAN H und CAN L einen Kurzschluss gegen ein anderes Potential oder untereinander aufweisen. Daher ist es wünschenswert, jederzeit festzustellen, ob eine derartige Fehlerbedingung vorliegt. Erschwerend bei der Ermittlung derartiger Fehlbedingungen tritt jedoch ein, dass es auf den Datenbusleitungen CAN H bzw. CAN L eine Masseverschiebung geben kann, die insbesondere bei der Umgebung von Fahrzeugen auftreten kann. Es ist daher eine erfindungsgemäße Schaltungsanordnung zur Fehlererkennung vorgesehen, welche zwar auf Kurzschlüsse des Zweidraht-Datenbusses reagiert, welche jedoch unempfindlich gegen Potentialverschiebungen der beiden Busleitungen ist.

Der Kerngedanke der erfindungsgemäßen Schaltungsanordnung zur Fehlererkennung besteht darin, eine Messung der Differenz der beiden Treiberströme, die von den Treibern 1 bzw. 2 auf den Datenbus gegeben werden, vorzunehmen. Im Gegensatz zu den Anordnungen nach dem Stand der Technik, bei denen Spannungen ausgewertet werden, wird hier also eine Strom-Auswertung vorgenommen, die deutlich unempfindlicher gegen Potentialverschiebungen oder gegen äußere EMV-Einflüsse ist.

Die erfindungsgemäße Schaltungsanordnung weist daher Mittel 4 zur Differenzstrommessung auf. Die Mittel 4 sind in dem Ausführungsbeispiel gemäß Figur 1 als Komperator ausgebildet, dem von dem Treiber 1 und dem Treiber 2 jeweils ein Signal zugeführt wird, welches proportional dem Treiberstrom ist, den der Treiber 1 bzw. der Treiber 2 in die jeweilige Datenbusleitung CAN H bzw. CAN L schickt. Mittels des Komperators 4 wird eine Differenzbildung dieser Treiberströme vorgenommen und mit einem vorgegebenen Grenzwert verglichen. Diese Vergleichsergebnis wird als Signal C an Mittel 5 zur Auswertung gegeben. Die Mittel 5 werten das Signal C weiter aus und liefern ein entsprechendes Fehlersignal F. Da die Auswertung der Differenz der Treiberströme nur während des Sendens dominanter Bits mittels des in Figur 1 dargestellten Transivers stattfinden soll, wird den Mitteln 5 zur Auswertung das Signal TXD zugeführt, so dass die Mittel 5 die Auswertung des Signals C nur während solcher Zeiten vornehmen, in denen das Signal TXD einen niedrigen Pegel hat, in denen also der Transiver ein dominantes Bit auf dem Datenbus sendet. Die Mittel 5 können darüber hinaus so ausgelegt sein, dass sie eine zeitliche Verzögerung des Signals F vornehmen und/oder dass sie eine Auswertung über mehrere Werte des Signals C vornehmen.

Darüber hinaus kann in der Figur nicht dargestellter weise mittels eines Summirers eine Summenbildung der Treiberströme vorgenommen werden und mittels eines weiteren Komparators ausgewertet werden, indem ein Vergleich mit einem zweiten vorgegebenen Grenzwert vorgenommen wird. Das Vergleichssignal kann dazu herangezogen werden, das Signal TXD den Mitteln 5 nur während solcher Zieten zuzuführen, in denen das Summensignal den grenzwert unterschreitet. Damit können Arbitrierungsphasen und Acknowledge-Bits von der Fehlerauswertung ausgeschlossen werden. Somit wird verhindert, dass ein korrekt ausgewertetes Fehlersignal vorzeitig während einer solchen Phase ungewollt überschrieben wird. Arbitrierungsphasen und Acknowledge-Bits sind dadurch gekennzeichnet, dass mehrere Transceiver gleichzeitig ein dominantes Bit auf dem Bus senden können. Als Folge fällt die Summe der beiden Treiberströme unter einen Grenzwert und das Strom-Differenzsignal wird nicht ausgwertet.

Die Mittel 5 kann als Zähler mit einer Zähltiefe n ausgebildet sein, der bei positivem Signal C hochzählt und bei negativem Signal C herunterzählt. Das Zählereignis kann dabei am ende der dominanten Bitphase ausgelöst werden. Überschreitet der Zähler einen vorgegebenen Wert, wird das Fehlersignal F gesetzt. Hierdurch wird gleichzeitig eine Majoritätsauswertung erzielt, da erst dann ein Fehlersignal ausgegeben wird, wenn n-mal häufiger ein Stromdifferenz-Fehler als kein solcher Fehler festgestellt worden ist.

In Figur 2 ist eine mögliche Ausgestaltung dem Mittel 5 zur Auswertung gemäß Figur 1 dargestellt. Die Darstellung gemäß Figur 2 zeigt eine Schieberegisterkette von 3 D-Flip-Flops 11, 12 und 13, die hintereinander geschaltet sind Den Takteingängen der D-Flip-Flops 11, 12 und 13 wird das Signal TXD zugeführt. Dem ersten Schieberegister 11 wird eingangsseitig das Signal C zugeführt. Das letzte D-Flip-Flop 13 der Schieberegisterkette liefert ausgangsseitig das Fehlersignal F.

Mittels eines solchen Schieberegisters innerhalb dem Mittel 5 zur Auswertung kann eine Verzögerung der Fehlerausgabe erzielt werden, wobei die Dauer der Verzögerung von der Länge des Schieberegisters abhängt. Jeder neue Wert C wird mit einem neuen Impuls des Signals TXD in das darauffolgende Schieberegister übernommen. In dem Beispiel gemäß Figur 3 wird so eine Verzögerung des Fehlersignals F um die Dauer drei übertragener dominanter Bits erzielt.

Dabei werden die D-Flip-Flops 11, 12 und 13 vorteilhaft mittels der positiven Flanke des Signals TXD getaktet. Diese Rückflanke des Signals TXD erscheint am Ende eines jeden dominanten Bits. Zu diesem Zeitpunkt sind die Treiber 1 und 2 der Anordnung gemäß Figur 1 noch voll aktiv, so dass eine Auswertung der Treiberströme erfolgen kann. Andererseits wird durch die Auswertung zu diesem Zeitpunkt sichergestellt, dass Einschwingvorgänge, die sich beim Aufschalten eines dominanten Bits auf die Datenbusleitung CAN H bzw. CAN L ergeben, nicht mehr wirksam sind. Eine andere Möglichkeit, eine solche Auswertung der Treiberströme erst gegen Ende der Bitphase eines jeden übertragenen dominanten Bits vorzunehmen, ist in Figur 3 dargestellt. Figur 3 zeigt ein Schieberegister mit D-Flip-Flops 11, 12 und 13 entsprechend der Verschaltung gemäß Figur 2. In der Variante gemäß Figur 3 wird jedoch das Signal TXD mittels eines Timers 14 verzögert. Hier sind die D-Flip-Flops so ausgelegt, dass sie auf die Vorderflanke des TXD-Signals, also auf dessen negative Flanke reagieren. Mittels des Timers 14 wird eine solche Verzögerung eingestellt, dass die D-Flip-Flops 11, 12 bzw. 13 Daten an ihren Dateneingängen D erst während der zweiten Hälfte der Dauer eines dominanten Bits übernehmen. Auch auf diese Weise kann somit sichergestellt werden, dass eine Auswertung der Differenzströme erst in der zweiten Hälfte eines übertragenen dominanten Bits stattfindet.

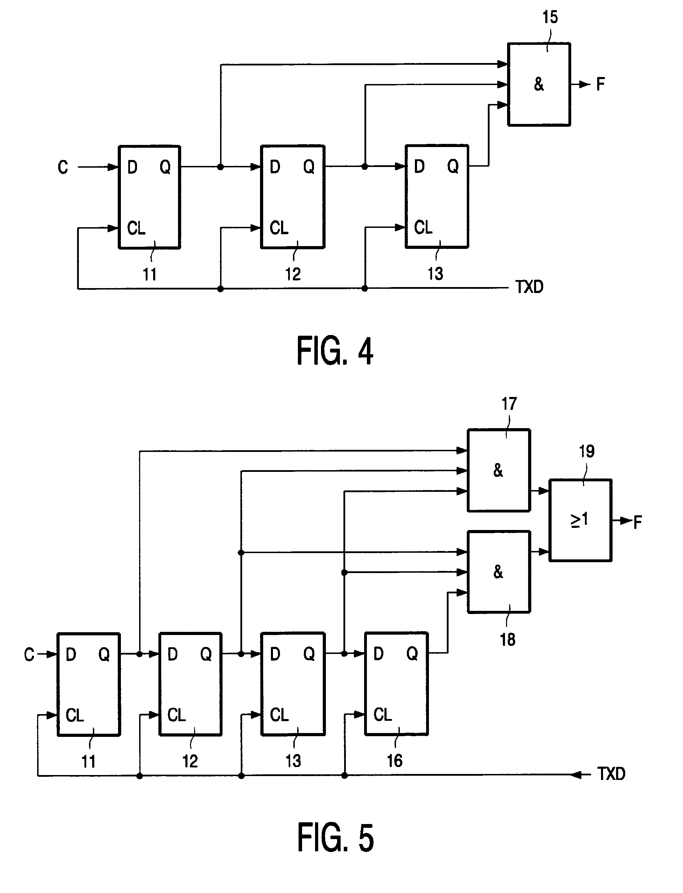

Figur 4 zeigt eine weitere Variante der Mittel 5 der Schaltungsanordnung gemäß Figur 1. Auch in dieser Variante sind 3 D-Flip-Flops 11, 12 und 13 vorgesehen, welche hintereinander geschaltet sind und mittels des Signals TXD getaktet werden. Bei dieser Variante wird jedoch nicht eine Verzögerung der Ausgabe des Fehlersignals F erzielt. Vielmehr ist hier das Ziel, eine Majoritätsauswertung dreier aufeinanderfolgender, in den D-Flip-Flops 11, 12 und 13 gespeicherter Fehlersignale zu erzielen. Dazu sind alle drei Datenausgänge Q der D-Flip-Flops 11, 12 und 13 auf drei Eingänge eines UND-Gatters 15 geführt. Das UND-Gatter 15 liefert ausgangsseitig das Fehlersignal F. Hierdurch wird erreicht, dass ein Fehlersignal F nur dann abgegeben wird, wenn während dreier aufeinanderfolgender dominanter Bits das Signal C signalisiert hat, dass der Differenzstrom der beiden Treiber den vorgegeben Grenzwert überschritten hat.

Selbstverständlich sind auch andere Varianten der Majoritätsauswertung möglich. In jedem Falle soll durch eine Majoritätsauswertung sichergestellt werden, dass ein Fehlersignal nicht bereits dann abgegeben wird, wenn während des Sendens eines einzelnen dominanten Bits die Fehlerbedingung erfüllt war, da dies gegebenenfalls aufgrund von Störungen der Fall gewesen sein könnte.

Die in Figur 4 dargestellte Variante der Mittel 5 zur Auswertung des Differenzsignals bieten nicht mehr die Möglichkeit, eine zeitverzögerte Auswertung vorzunehmen. Dies ist jedoch gsmäß Figur 5 wiederum möglich Figur 5 weist ein Schieberegister mit D-Flip-Flops 11, 12 und 13 auf, die entsprechend der Variante gemäß Figur 4 verschaltet sind. Das Schieberegister ist jedoch um ein weiteres D-Flip-Flop 16 verlängert, das dem D-Flip-Flop 13 nachgeschaltet ist.

Es ist ein erstes UND-Gatter 17 vorgesehen, welches die Datenausgänge der D-Flip-Flops 11, 12 und 13 auswertet, sowie ein zweites UND-Gatter 18, welches die Datenausgänge der D-Flip-Flops 12, 13 und 16 auswertet. Die Ausgangssignale der beiden &-Gatter 17 und 18 sind auf ein ODER-Gatter 19 geführt, welches ausgangsseitig das Fehlersignal F liefert.

Mittels des verlängerten Schieberegisters und der modifizierten Majoritätsauswertung in der Schaltung gemäß Figur 5 wird erreicht, dass außer der Majoritätsauswertung auch eine Zeitverzögerung erreicht wird, wie dies für die Varianten gemäß Figuren 2 und 3 ohne Majoritätsauswertung vorgesehen ist.

Die in Figur 5 dargestellte Variante der Mittel 5 zur Auswertung kombiniert also eine Zeitverzögerung der Ausgabe des Fehlersignals F der Varianten gemäß Figuren 2 und 3 mit einer Majoritätsauswertung der in Figur 4 dargestellten Variante der Mittel 5 zur Auswertung.

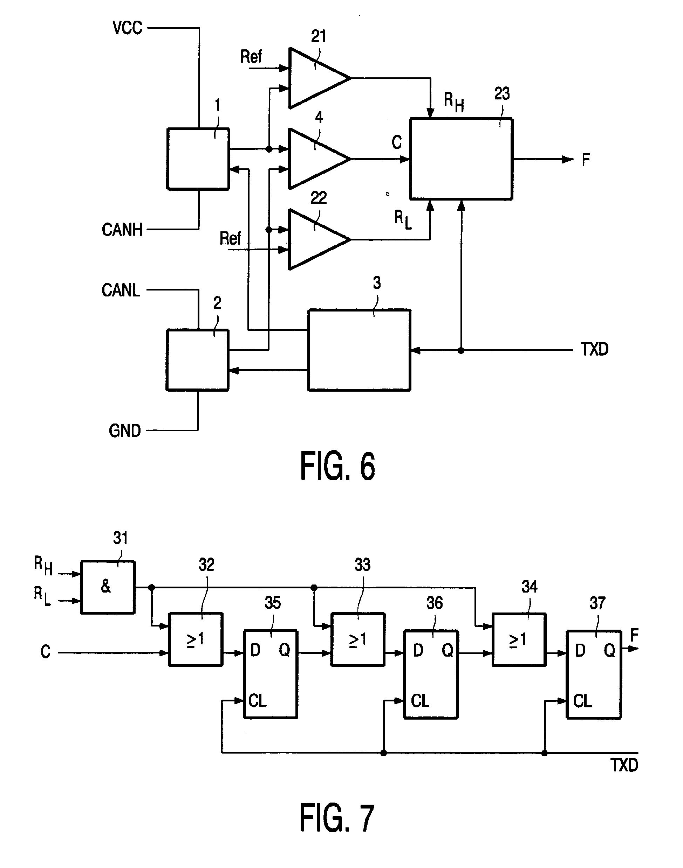

In Figur 6 ist ein Blockschaltbild einer zweiten Ausführungsform der erfindungsgemäßen Schaltungsanordnung in einem Transiver dargestellt.

Der Transiver des zweiten Ausführungsbeispiels gemäß Figur 6 weist in gleicher Weise wie der Transiver des ersten Ausführungsbeispiels gemäß Figur 1 einen ersten Treiber 1, einen zweiten Treiber 2 und eine Treibersteuerung 3 auf. Auch die Funktionsweise des Transivers ist insoweit identisch, mit derjenigen des ersten Ausführungbeispieles gemäß Figur 1.

Auch die erfindungsgemäße Schaltungsanordnung zur Fehlererkennung weist entsprechend des ersten Ausführungsbeispiels eine Komperator 4 auf, der von den beiden Treibern 1 und 2 jeweils die Treiberströme zugeführt werden und welcher ausgangsseitig ein Signal C liefert, welches den Wert der Differenz der beiden Treiberströme signalisiert. Dieses Signal wird mittels Mitteln 23 zur Auswertung ausgewertet, welche ausgangsseitig das Fehlersignal aus S liefern. In soweit ist auch die Funktionsweise der erfindungsgemäßen Schaltungsanordnung in dem zweiten Ausführungsbeispiel gemäß Figur identisch mit derjenigen in dem ersten Ausführungsbeispiel gemäß Figur 1.

Das zweite Ausführungsbeispiel der erfindungsgemäßen Schaltungsanordnung gemäß Figur 6 weist jedoch zusätzlich Mittel 21, 22 und 23 auf, die einen unmittelbaren Vergleich der Ströme der Treiber 1 und 2 mit einem Referenzsignal REF vornehmen und welche dann, wenn die Treiberströme einzeln dieses Referenzsignal REF überschreiben, ebenfalls ein Fehlersignal abgeben.

Dazu ist ein Komperator 21 vorgesehen, welcher den Treiberstrom des Treibers 1 mit dem Referenzsignal REF vergleicht und welcher ein entsprechendes Ausgangssignal an die Mittel 23 zur Auswertung liefert.

In entsprechender Weise ist ein Komperator 22 vorgesehen, welcher den Treiberstrom des Treibers 2 mit dem Referenzsignal REF vergleicht und das Vergleichsergebnis ebenfalls an die Mittel 23 zur Auswertung abgibt.

Die Mittel 23 zur Auswertung gegen dann ein Fehlersignal ab, wenn entweder die Differenz der Treiberströme den vorgegebenen Grenzwert überschreitet, wenn der Treiberstrom des Treibers 1 das Referenzsignal REF überschreitet oder wenn der Treiberstrom des Treibers 2 das Referenzsignal REF überschreitet.

Durch diese zusätzliche Auswertung der einzelnen Treiberströme wird eine zusätzliche Kennungssicherheit erzielt. Insbesondere kann durch die Ergänzung der Schaltung ein Kurzschluss zwischen den Leitungen sicherer erkannt werden.

Figur 7 zeigt eine mögliche Implementierung der Mittel 23 zur Auswertung der Schaltung gemäß Figur 6.
Die beiden von den Komperatoren 21 und 22 abgegebenen Signale R Index H und R Index L werden in Schaltung gemäß Figur 7 einem UND-Gatter 31 zugeführt, dessen Ausgangssignal auf erste Eingänge von ODER-Gattem 32,33 und 34 gegeben wird.

Im zweiten Eingang des ODER-Gatters 32 ist das Signal C des Komperators 4 der Schaltung gemäß Figur 6 zugeführt.

Die Schaltung gemäß Figur 7 weist drei D-Flip-Flops von 35, 36 und 37 auf, welche mittels des Signals TXD getaktet werden.

Das Ausgangssignal des ODER-Gatters 32 ist auf den Dateneingang D des Flip-Fops 35 geführt, dessen Ausgangssignal auf den zweiten Eingang des ODER-Gatters 33 geführt ist. Dessen Ausgangssignal wiederum ist auf das zweite D-Flip-Flop 36 geführt, dessen Ausgangssignal auf den zweiten Eingang des ODER-Gatters 34 gekoppelt ist. Das Ausgangssignal des ODER-Gatters 34 ist auf den Dateneingang des D-Flip-Flop 37 gekoppelt, dessen Datenausgang Q das Fehlersignal F liefert.

Durch die Variante des Schieberegisters in der Schaltung gemäß Figur 7 wird erreicht, dass für jeden einzelnen zwischengespeicherten Fehlerzustand außerdem überprüft wird, ob eines der Signale R Index H oder R Index L für das jeweilige dominante Bit angesprochen hat. Somit speichern die D-Flip-Flops 35, 36 und 37 für jedes einzelne dominante Bit dann ein Fehlersignal, wenn eine der drei Fehlerbedingungen erfüllt war, wenn also eines der Signale R Index H, R Index L oder C während des Sendens des ihm zugeordneten dominanten Bits aktiv war.

Bezüglich des zweiten Ausführungsbeispiels gemäß Figur 6 und 7 kann eine zusätzliche Filterung des Fehlersignals F vorgenommen werden. Dabei ist jedoch zu beachten, dass eine Erkennung des Kurzschlusses zwischen den beiden CAN-Busleitungen CAN H und CAN L unmittelbar ausgewertet werden muss, da ein solcher Kurzschluss dazu führt, dass keine Datenübertragung über den Bus mehr möglich ist und die Datenübertragung sofort deaktiviert wird.

## Patentansprüche

1. Schaltungsanordnung zur Fehlererkennung eines Zweidraht-Datenbusses, auf dem gesendete, dominante Bits differentiell auf den beiden Busleitungen übertragen werden,
**dadurch gekennzeichnet,**
**dass** die Anordnung Mittel zur Differenzstrommessung (4) aufweist, mittels derer in einem Sender beim Senden dominanter Bits auf den Datenbus die Differenz der Treiberströme, mit denen die beiden Busleitungen angesteuert werden, gemessen wird, und dass Mittel zur Auswertung (5) vorgesehen sind, welche ein Fehlersignal abgeben, wenn die Differenz der Treiberströme einen vorgegebenen Grenzwert überschreitet.

2. Anordnung nach Anspruch 1,
**dadurch gekennzeichnet,**
**dass** es sich bei dem Zweidraht-Bus um einen CAN-Bus nach ISO 11898 handelt.

3. Anordnung nach Anspruch 1,
**dadurch gekennzeichnet,**
**dass** die Anordnung die Messung und/oder Auswertung der Differenz der Treiberströme in einer zweiten Hälfte der Dauer eines gesendeten Bits vornimmt.

4. Anordnung nach Anspruch 1,
**dadurch gekennzeichnet,**
**dass** die Anordnung zusätzlich Mittel (21,22,23) aufweist, welche beide Treiberströme einzeln mit einer Referenzstrom vergleichen und welche dann eine Fehlermeldung abgeben, wenn beide Treiberströme einzeln den Referenzstrom übersteigen.

5. Anordnung nach Anspruch 2 und 3,
**dadurch gekennzeichnet,**
**dass** das TXD-Eingangssignal eines CAN-Bus-Senders zur Bestimmung eines Zeitpunkts der Messung und/oder Auswertung der Treiberströme eingesetzt wird, insbesondere, dass die Rückflanken des TXD-Signals die Messzeitpunkte bestimmen.

6. Anordnung nach Anspruch 3,
**dadurch gekennzeichnet,**
**dass** die Anordnung einen Timer (14) aufweist, welcher die Messung und/oder Auswertung der Treiberströme um eine vorgegebene Zeitspanne nach Beginn des Sendens eines dominanten Bits auslöst.

7. Anordnung nach Anspruch 2,
**dadurch gekennzeichnet,**
**dass** die Anordnung die Messung und/oder Auswertung der Treiberströme nur während einer Transmit Interrupt Service Routine des CAN-Busses vornimmt.

8. Anordnung nach Anspruch 2,
**dadurch gekennzeichnet,**
**dass** die Anordnung ein Schieberegister (11,12,13;16; 35,36,37) aufweist, mittels dessen das Fehlersignal verzögert ausgegeben wird.

9. Anordnung nach Anspruch 8,
**dadurch gekennzeichnet,**
**dass** die Anordnung eine Majoritätsschaltung (15;17,18,19) aufweist, welche die Auswertung der Messungen derart gestaltet, dass nur dann eine Fehlermeldung abgegeben wird, wenn die Majorität mehrerer Messungen ein Überschreiten des Grenzwerts ergeben hat.

10. Anordnung nach Anspruch 1 oder 8,
**dadurch gekennzeichnet,**
**dass** die Anordnung bei einer Majoritätsauswertung auch die jeweiligen Bitpositionen berücksichtigt und vorzugsweise eine Fehlermeldung dann unterdrückt, wenn während des Sendens eines Bits der Grenzwert überschritten wurde, nicht aber beim Senden der beiden diesem Bit benachbarten Bits.

11. Anordnung nach Anspruch 1,
**dadurch gekennzeichnet,**
**dass** die Anordnung neben der Auswertung der Differenz der Treiberströme auch eine Auswertung von deren Summe vornimmt und eine Auswertung der Differenz der Treiberströme nur dann vornimmt, wenn die Summe der Treiberströme einen vorgegebenen Grenzwert überschreitet.

## Claims

1. A circuit arrangement for error recognition of a two-wire data bus on which sent, dominant bits are differentially transmitted over the two bus lines, **characterized in that** the arrangement comprises differential current measuring means (4) by means of which the difference of the driver currents by which the two bus lines are driven is measured in a transmitter when dominant bits are transmitted over the data bus and **in that** evaluation means (5) are provided which produce an error signal when the difference of the driver currents exceeds a predefined limit value.

2. An arrangement as claimed in claim 1, **characterized in that** the two-wire bus is a CAN bus as specified in ISO 11898.

3. An arrangement as claimed in claim 1, **characterized in that** the arrangement carries out the measurement and/or evaluation of the difference between the driver currents in a second half of the duration of a transmitted bit.

4. An arrangement as claimed in claim 1, **characterized in that** the arrangement additionally comprises means (21, 22, 23) which compare the two driver currents separately to a reference current and which subsequently produce an error message when the two driver currents separately exceed the reference current.

5. An arrangement as claimed in claim 2 and claim 3, **characterized in that** the TXD input signal of a CAN bus transmitter is used for determining an instant at which the measurement and/or evaluation of the driver currents is commenced, more particularly **in that** the return edges of the TXD signal determine the instants at which the measuring operation is carried out.

6. An arrangement as claimed in claim 3, **characterized in that** the arrangement comprises a timer (14) which triggers the measurement and/or evaluation of the driver currents after a predefined period of time subsequent to the start of the transmission of a dominant bit.

7. An arrangement as claimed in claim 2, **characterized in that** the arrangement carries out the measurement and/or evaluation of the driver currents only during a transmit interrupt service routine of the CAN bus.

8. An arrangement as claimed in claim 2, **characterized in that** the arrangement comprises a shift register (11, 12, 13; 16; 35, 36, 37) by means of which the error signal is produced as a delayed signal.

9. An arrangement as claimed in claim 8, **characterized in that** the arrangement comprises a majority circuit (15; 17, 18, 19) which carries out the evaluation of the measured values such that an error message is not produced until the majority of a plurality of measurements has proved to exceed the limit value.

10. An arrangement as claimed in claim 1 or 8, **characterized in that** the arrangement during a majority measurement also takes account of the respective bit positions and preferably suppresses an error message when the limit value is exceeded during the transmission of a bit but not when the bits that are neighboring this bit are transmitted.

11. An arrangement as claimed in claim 1, **characterized in that** the arrangement in addition to evaluating the difference between the driver currents also carries out an evaluation of their sum and does not carry out an evaluation of the difference between the driver currents until the sum of the driver currents exceeds a predefined limit value.

## Revendications

1. Agencement de circuits pour la détection d'erreurs sur un bus de données bifilaire sur lequel des bits dominants envoyés sont transmis de façon différentielle sur les deux lignes du bus,
**caractérisé en ce que**
l'agencement comporte des moyens de mesure de courant différentiel (4) permettant de mesurer la différence entre les courants d'attaque, avec lesquels les deux lignes de bus sont attaqués, lors de l'émission de bits dominants sur le bus de données, et **en ce que** il est prévu des moyens d'exploitation (5) qui délivrent un signal d'erreur lorsque la différence entre les courants d'attaque dépasse vers le haut une valeur limite prescrite.

2. Agencement selon la revendication 1, **caractérisé en ce que** le bus bifilaire est un bus CAN selon ISO 11 898.

3. Agencement selon la revendication 1, **caractérisé en ce que** l'agencement effectue la mesure et/ou l'exploitation de la différence entre les courants d'attaque dans une deuxième moitié de la durée d'un bit émis.

4. Agencement selon la revendication 1, **caractérisé en ce que** l'agencement comporte en plus des moyens (21, 22, 23) qui comparent les deux courants d'attaque individuellement à un courant de référence et qui ne délivrent un message d'erreur q u e si les deux courants dépassent individuellement vers le haut le courant de référence.

5. Agencement selon les revendications 2 et 3, **caractérisé en ce que** le signal d'entrée TXD d'un émetteur de bus CAN est utilisé pour déterminer un instant de la mesure et/ou de l'exploitation des courants d'attaque, notamment **en ce que** les flancs arrières du signal TXD déterminent les instants de mesure.

6. Agencement selon la revendication 3, **caractérisé en ce que** l'agencement comporte une horloge (14) qui déclenche la mesure et/ou l'exploitation des courants d'attaque sur un intervalle de temps prescrit après le début de l'émission d'un bit dominant.

7. Agencement selon la revendication 2, **caractérisé en ce que** l'agencement n'effectue la mesure et/ou l'exploitation des courantes d'attaque seulement que pendant l'exécution d'u n sous-programme d'interruption (Transmit Interrupt Service Routine) du bus CAN.

8. Agencement selon la revendication 2, **caractérisé en ce que** l'agencement comporte un registre à décalage (11, 12, 13 ; 16 ; 35, 36, 37) permettant de délivrer le signal d'erreur avec un retard.

9. Agencement selon la revendication 8, **caractérisé en ce que** l'agencement comporte un circuit de majorité (15 ; 17, 18, 19) qui effectue l'exportation des mesures de telle sorte qu'un message d'erreur n'est délivré que si la majorité de plusieurs mesures indique un dépassement vers le haut de la valeur limite.

10. Agencement selon la revendication 1 ou 8, **caractérisé en ce que**, lors d'une exploitation de la majorité, l'agencement tient compte également de la position respective des bits et ne supprime avantageusement un message d'erreur que si la valeur limite a été dépassée vers le haut pendant l'émission d'un bit mais pas pendant l'émission des deux bits adjacents à ce bit.

11. Agencement selon la revendication 1, **caractérisé en ce que** l'agencement effectue, en plus de l'exploitation de la différence entre les courants d'attaque, également une exploitation de leur somme et n'effectue une exploitation de la différence des courants d'attaque que si la somme des courants d'attaque dépasse vers le haut une valeur limite prescrite.
